# EUROPÄISCHE PATENTSCHRIFT

(11) **EP 2 221 640 B1**
(45) Veröffentlichungstag und Bekanntmachung des Hinweises auf die Patenterteilung: **21.10.2015**
(21) Anmeldenummer: 10152315.7
(22) Anmeldetag: 01.02.2010
(51) Int. Cl.: G01S 17/58, G01S 17/02, G08G 1/04, G08G 1/054, G01S 17/42, G01S 17/88

(54) **Verfahren zur Messung der Geschwindigkeit eines Fahrzeuges und sichtbaren Zuordnung in einer Dokumentation**
Method for measuring the speed of a vehicle and visual allocation in documentation
Procédé de mesure de la vitesse d'un véhicule et affectation visible dans une documentation

(30) Priorität: 02.02.2009 DE 102009007055
(43) Veröffentlichungstag der Anmeldung: 25.08.2010
(73) Patentinhaber: JENOPTIK Robot GmbH, 40789 Monheim am Rhein (DE)
(72) Erfinder: Dr. Gebauer, Christoph, 50937, Köln (DE); Dr. Lehning, Michael, 31137, Hildesheim (DE)
(74) Vertreter: Schaller, Renate

(56) Entgegenhaltungen:
- EP-A1- 1 990 655
- DE-A1- 10 353 348

## Beschreibung

Die Erfindung betrifft ein Verfahren zur Erfassung der Geschwindigkeit eines Fahrzeuges sowie einer beweiskräftigen, sichtbaren Zuordnung der erfassten Geschwindigkeit zu dem angemessenen Fahrzeug, wie es gattungsgemäß aus der Patentschrift DE 10 2007 022 373 A1 bekannt ist.

Um eine Fahrbahn mit mehreren Fahrspuren überwachen zu können, werden insbesondere Doppler-Radarsysteme und Laserscansysteme eingesetzt, die seitlich der Fahrbahn aufgestellt mit ihrem Radarkegel bzw. ihrem Scanwinkelbereich die Fahrbahn in einem vorgegebenen Bereich überdecken.

Von Fahrzeugen, die diesen Bereich durchfahren, wird die Geschwindigkeit erfasst, üblicherweise mit einer vorgegebenen Grenzgeschwindigkeit verglichen und eine fotografische Aufnahme erstellt, in der das angemessene Fahrzeug und die erfasste Geschwindigkeit abgebildet ist, wenn die erfasste Geschwindigkeit höher als die Grenzgeschwindigkeit ist.

Damit derartige Geräte für den bestimmungsgemäßen Gebrauch zugelassen werden, muss einerseits sichergestellt und plausibel gemacht werden, dass die gemessene Geschwindigkeit korrekt ist und andererseits muss die gemessene Geschwindigkeit dem angemessenen Fahrzeug zweifelsfrei zugeordnet werden können.

Die Erfindung betrifft ein Verfahren, welches das Problem der zweifelsfreien Zuordnung löst, insbesondere der Zuordnung einer gemessenen Geschwindigkeit zu einem in einem Bilddokument abgebildeten Fahrzeug.

Die Tatsache, dass es Messsituationen gibt, in denen keine zweifelsfreie Zuordnung der gemessenen Geschwindigkeit zu dem angemessenen Fahrzeug möglich ist, ist beim Prinzip der Radartechnik damit begründet, dass die Radarstrahlung üblicherweise einen Radarkegel bildet, der sich unter einem Winkel von ca. 5 - 10° ausbreitet und entsprechend mit zunehmender Entfernung an Breite zunimmt, wodurch sich bei Anwendung auf einer mehrspurigen Fahrbahn gleichzeitig mehrere Fahrzeuge im Radarkegel (Messbereich) befinden können.

Um ein angemessenes Fahrzeug, das heißt ein die Radarstrahlung reflektierendes Fahrzeug eindeutig zu identifizieren, das heißt das angemessene Fahrzeug in einer Gruppe von Fahrzeugen zu erkennen, wird in der EP 0 935 764 B1 vorgeschlagen, gleichzeitig mit der Geschwindigkeit auch die Entfernung zu erfassen und über die erfasste Entfernung das Fahrzeug einer Fahrspur zuzuordnen.

Für die Entfernungsmessung mittels Radartechnik sind Impulsradargeräte und Radargeräte mit frequenzmodulierten Dauerradarsignalen bekannt. In beiden Fällen wird die Entfernung nicht wirklich gemessen, sondern aus anderen Messgrößen abgeleitet. Wenn also in der nachfolgenden Beschreibung von Messwerten und einer gemessenen Geschwindigkeit gesprochen wird, soll eine abgeleitete Geschwindigkeit verstanden werden. Gleiches trifft für die Entfernung und den Winkel zu.

Impulsradargeräte ermitteln die Entfernung über eine Laufzeitmessung und erfordern eine hochgenaue Zeitmessung, um die Entfernung, das heißt den radialen Abstand von reflektierenden Fahrzeugteilen zur Radarantenne zu messen. Eine Auflösung einer Distanz von z. B. einem Meter erfordert eine Zeitauflösung von 3,33 ns. Eine Ablaufsteuerung des Messvorgangs erfordert daher für hohe Auflösungen extreme technische Aufwände.

Mit Dauerradargeräten erfolgt die Ermittlung der Entfernung aus der Phasendifferenz reflektierter Radarsignale unterschiedlicher Frequenz.

Bekanntermaßen wird mit einem Dauerradargerät eine in Amplitude und Frequenz konstante Dauerradarstrahlung ausgesendet. Bei der Reflexion an einem bewegten Objekt, sprich einem Fahrzeug, erfährt diese Radarstrahlung eine von der Geschwindigkeit des Fahrzeuges abhängige Frequenzverschiebung. Der in das Radargerät bzw. auf die Radarantenne reflektierte Strahlungsanteil wird mit der ausgesendeten Radarstrahlung verglichen und eine Frequenzdifferenz, die so genannte Dopplerfrequenz gebildet, die zu der Geschwindigkeit des Fahrzeuges proportional ist.

Mit der Ausstrahlung einer Radarstrahlung in verschiedenen Frequenzen erhält man frequenzverschobene Reflexionsstrahlungen, aus deren Phasendifferenz die Entfernung abgeleitet wird. Die Geschwindigkeit und die Entfernung werden somit über einen gemeinsamen Messvorgang ermittelt, womit eine eineindeutige Zuordnung der Messwerte zueinander gesichert ist.

Im Unterschied zur Geschwindigkeitsmessung, die mit dem Doppler-Radar-Prinzip sehr genau gemessen werden kann, ist die Schwankungsbreite der Entfernungsmesswerte sehr groß. Die Punktreflexionen, die von einem Fahrzeug zur Radarantenne gelangen, erstrecken sich auf die gesamte Fahrzeugkontur, auf die der Radarquerschnitt projiziert wird. Der auf ein durch den Radarkegel fahrendes Fahrzeug projizierte Radarquerschnitt ändert sich in Abhängigkeit von der jeweiligen Geometrie des Fahrzeuges sowie seiner Position im Radarkegel, beginnend vom Eintritt in bis hin zum Austritt aus dem Radarkegel. Durch den Empfänger wird zu jedem Messzeitpunkt eine Summe von Messwerten (Messwertschar) aus Partialreflexionen detektiert. Statistisch wird diese Summe zusammen mit anderen parasitär wirkenden Reflektoren wie Leitplanken oder Metallzäunen im Regelfall als Rayleigh-Verteilung empfangen. Es werden Entfernungen gemessen, welche in der Größenordnung der Fahrbahnbreite und der Fahrzeugabmaße streuen.

Eine eindeutige Identifikation eines Fahrzeuges in einer Gruppe von Fahrzeugen nur anhand von einzelnen Entfernungsmesswerten, die einer Fahrbahn zugeordnet werden, ist aufgrund der potentiellen Mehrdeutigkeiten infolge des unterschiedlichen Reflexionsverhaltens der Fahrzeuge und möglichen Mehrfachreflexionen nicht sicher möglich.

Selbst wenn zu jedem Messzeitpunkt aus der Summe der Messwerte ein Mittelwert gebildet wird, kann dieser Mittelwert nicht in jedem Fall eindeutig einer Fahrbahn zugeordnet werden.

Gleiches trifft auch dann zu, wenn Messwerte außerhalb einer vorgegebenen Toleranzbreite ignoriert werden und der Mittelwert nur aus den verbleibenden Messwerten gebildet wird. Auch wenn hiermit eine Verfälschung des gemittelten Entfernungswertes in Folge von Partialreflexionen an parasitär wirkenden Reflektoren ausgeschlossen wird, ist nicht für jede Messsituation eine Identifikation anhand des gemittelten Entfernungswertes und dessen Zuordnung zu einer Fahrbahn möglich.

Das Radargerät müsste zwingend in einem solchen spitzen Winkel zur Fahrbahn ausgerichtet werden, dass alle denkbaren Entfernungsmesswerte eindeutig nur jeweils einer Fahrbahn zugeordnet werden können. Da die Fahrzeuge aufgrund der Breite des Radarkegels zwingend einen bestimmten Entfernungsbereich durchfahren, dürfen sich diese Entfernungsbereiche für zwei Fahrzeuge, die voneinander unterschieden werden sollen, nicht überlappen. Die Entfernungsbereiche verschieben sich jedoch, wenn die Fahrzeuge nicht ideal in der Mitte der Fahrspur fahren und sie kommen in jedem Fall zur Überlappung, wenn ein Fahrzeug im Messbereich die Fahrspur wechselt.

Dadurch entstehen Messsituationen, in denen ein Fahrzeug nicht eindeutig einer Fahrspur zugeordnet werden kann, womit die Fahrspur kein sicheres Merkmal zur Identifikation eines Fahrzeuges in einer Gruppe von Fahrzeugen darstellt.

In der DE 10 2007 022 373 A1 wird nun ein Verfahren vorgeschlagen, in dem unabhängig von Merkmalen der Fahrbahn oder anderen Umgebungsmerkmalen ein angemessenes Fahrzeug in einer Gruppe von Fahrzeugen unterschieden werden kann.

Zur Durchführung eines Verfahrens nach der DE 10 2007 022 373 A1 wird eine Radarstrahlung so auf eine Fahrbahn gerichtet, dass gleichzeitig mehrere Fahrzeuge durch einen durch die Radarstrahlung (Radarkeule) definierten Messbereich fahren können.

Hierzu kann ein Radargerät neben der Fahrbahn unter einem spitzen horizontalen Aufstellwinkel der Radarachse zur Fahrbahnrichtung positioniert werden.

Das Radargerät kann auch oberhalb der Fahrbahn, z. B. an einer Brücke befestigt sein, wobei hier horizontal betrachtet die Radarachse mit der Fahrbahnrichtung zusammenfällt.

Diese beiden grundsätzlich unterschiedlichen Anordnungen eines Radargerätes haben auf die Messung der Geschwindigkeit mittels des Doppler-Prinzips kaum eine Auswirkung, sind jedoch bezüglich der Möglichkeit der Identifikation eines Fahrzeuges anhand seiner radialen Entfernung vom Radargerät von wesentlichem Unterschied.

Bei einer Anordnung eines Radargerätes am Fahrbahnrand durchfahren Fahrzeuge, die nicht eine identische Fahrzeugspur beschreiben, unterschiedliche Entfernungsbereiche. Die Entfernungsbereiche können sich überlappen, weshalb eine eindeutige Identifikation anhand nur eines Entfernungswertes nicht immer sicher möglich ist. Erst durch die Erfassung einer Folge von Entfernungswerten, die den gesamten Entfernungsbereich beschreibt, den das Fahrzeug durchfährt, ist eine eindeutige Zuordnung möglich.

Bei einer Anordnung eines Radargerätes oberhalb der Fahrbahn durchfahren alle Fahrzeuge im Wesentlichen den gleichen Entfernungsbereich. Weder einzelne Entfernungswerte noch eine Folge von Entfernungen, die den gesamten Entfernungsbereich beschreiben, können für diesen Anwendungsfall ein Unterscheidungskriterium sein.

Erst mit Hilfe der Erfassung auch des Messwinkels, den ein vom Fahrzeug reflektierter Strahlungsanteil mit der Radarachse einschließt, ist eine Unterscheidung möglich, indem mittels Winkel und Entfernung eine Position im Radarkegel ermittelt wird und die Position als Unterscheidungskriterium dient.

Eine kontinuierliche Geschwindigkeitsmessung bzw. die Entfernungsmessung erfolgt durch Ausnutzung des Dopplerradareffektes bzw. des Frequenzumtastungsprinzips (FSK) in Auswertung der Phasendifferenz reflektierter Radarsignale unterschiedlicher Frequenz.

Eine Winkelmessung erfolgt z. B. mittels zweier Empfangsantennen über eine Triangulationsmessung.

Bei jedem Messvorgang entsteht somit für jedes Fahrzeug im Radarkegel ein Wertetripel aus Geschwindigkeit, Entfernung und Winkel (E(t); V(t); γ(t)), wobei die einzelnen Werte z. B. durch Mittelwertbildung aus einer Messwertschar von Partialreflexionen nach einer Rayleighverteilung gebildet werden, wie sie insbesondere für die Entfernung und den Winkel entstehen.

Die Messungen erfolgen über einen Zeitraum von ca. 100 ms bis hin zu einigen Sekunden, je nach Fahrzeuggeschwindigkeit zwischen Eintritt in und Austritt aus dem Radarkegel z. B. in einem Abstand von 20 ms, wodurch die Fahrzeugspuren mit einer hohen Genauigkeit bestimmt werden können.

Die vom Radarsensor ermittelten Aufeinanderfolgen von Wertetripeln werden jeweils einer Fahrzeugnummer (hier ist nicht dessen Kennzeichen gemeint), einer Eintrittszeit und einer Austrittszeit zugeordnet einem Rechner zugeführt.

Sollte während der Messung eine Geschwindigkeit detektiert worden sein, die oberhalb einer vorgegebenen Grenzgeschwindigkeit liegt, ermittelt der Rechner die Fahrzeugspur des betreffenden Verstoßfahrzeuges und gibt ein Signal an eine Kamera zur Erstellung einer Abbildung der aktuellen Verkehrsszene. Die Kamera ist in einem bekannten festen Abstand zum Radargerät 1 so angeordnet und eingestellt, dass die optische Achse in fester Winkelbeziehung zur Radarachse ausgerichtet ist und die Verkehrsszene über einen Tiefenschärfebereich um eine vorgegebene Entfernung, die als Fotopunkt bezeichnet wird, scharf abgebildet wird.

Da das Objektfeld der Kamera über alle Fahrspuren reicht, über die auch der Radarkegel gerichtet ist, können auch mehrere Fahrzeuge in der Aufzeichnung abgebildet sein, die sich zum Zeitpunkt des Auslösens der Kamera im Radarkegel befinden.

Um nun das Verstoßfahrzeug in der Abbildung eindeutig zu identifizieren, wird die vom Verstoßfahrzeug erfasste Fahrzeugspur in die Abbildung eingeblendet. Die Einblendung erfolgt vorteilhaft so, dass eine die Fahrzeugspur darstellende Markierung über die Bildpunkte in der Abbildung eingeblendet wird, die den über die Entfernung und den Winkel definierten Positionen, welche gemeinsam die Fahrspur bilden, im Objektfeld zuzuordnen sind.

Das heißt die Identifikation erfolgt allein anhand der zum Radargerät 1 relativ gemessenen Fahrzeugspur ohne absoluten Bezug auf einzelne Fahrspuren der Fahrbahn.

Die Markierung kann in Form von Bildpunkten, z. B. durch Punkte, Kreuze, Dreiecke oder ähnliches oder in Form einer Linie oder Fläche eingeblendet werden. Die Einblendung kann durch farbige Gestaltung oder durch Aufhellen bzw. Abdunkeln der entsprechenden Bildbereiche erfolgen. Um die eigentlichen Messwerte kann auch ein Toleranzbereich angegeben sein.

Vorteilhaft werden während der Durchfahrt eines Verletzerfahrzeuges mehrere Beweisfotos erstellt, die dieses dann an verschiedenen Positionen der ermittelten Fahrzeugspur zeigen.

Zusammengefasst unterscheidet sich ein Verfahren gemäß der DE 10 2007 022 373 A1 im Vergleich zu einem Verfahren gemäß der EP 0 935 764 B1 im Wesentlichen dadurch, dass ein angemessenes Fahrzeug in einer Gruppe von Fahrzeugen unabhängig von Merkmalen der Fahrbahn oder anderen Umgebungsmerkmalen unterschieden werden kann und sich die Markierung direkt aus den Messwerten ergibt.

Als nachteilig stellt sich der enorme Rechen- und Speicheraufwand dar, da zur Ermittlung der gefahrenen Fahrzeugspur alle Messwerte, die zu einem Fahrzeug erfasst werden, gespeichert und verarbeitet werden.

Der Erfindung liegt die Aufgabe zugrunde, ein Verfahren zur Erfassung der Geschwindigkeit von Fahrzeugen zu schaffen, bei dem mit einem geringen Rechen- und Speicheraufwand aus den Messwerten eine Markierung generiert werden kann, mit der das angemessene Fahrzeug in einem Dokument sichtbar gekennzeichnet wird.

Diese Aufgabe wird durch ein Verfahren mit den Merkmalen des Anspruches 1 gelöst.

Vorteilhafte Weiterbildungen sind in den Unteransprüchen beschrieben.

Die Erfindung soll nachfolgend beispielhaft anhand von Zeichnungen näher erläutert werden.

Es zeigen:
- Fig. 1: eine Messsituation mit einem Fahrzeug im Winkelbereich
- Fig. 2a: ein Beweisfoto erstellt aus eine digitalisierten Aufnahme und einer digitalisierten Markierung
- Fig. 2b: Prinzipskizze eines Beweisfotos gemäß Fig. 2a

Bei einem erfindungsgemäßen Verfahren wird eine Messstrahlung über einen vorgegebenen Winkelbereich 1 horizontal über eine Fahrbahn 2 gerichtet, sodass Fahrzeuge 3 beim Durchfahren des Winkelbereiches 1 Messwerte generieren, aus denen die Geschwindigkeit der Fahrzeuge 3 und die zeitliche Änderung deren Position innerhalb des Winkelbereiches 1 ermittelt werden.

Die Messstrahlung ist erfindungsgemäß eine gepulste Laserstrahlung, die in einer horizontalen Scanebene oberhalb der Fahrbahn 2 den Winkelbereich 1, der einen Scanwinkel ε einschließt, mit einer konstanten, vorgegebenen Scanfrequenz und einer konstanten, vorgegebenen Pulsfrequenz mehrfach abscannt. Dazu ist ein Laserscanner 4 neben der Fahrbahn 2 aufgestellt.

Während des Scannens trifft der Laserstrahl auf sich im Winkelbereich 1 befindenden Fahrzeuge 3 auf und wird reflektiert. Der jeweilige Auftreffpunkt wird jeweils durch einen Messpunkt Pₙ beschrieben.

Die Laufzeit des gepulsten Laserstrahls (Impulslaufzeit) zum angemessenen Fahrzeug 3 und zurück korreliert mit der zurückgelegten Wegstrecke, woraus die Entfernung eₙ eines Messpunktes Pₙ vom am Fahrbahnrand positionierten Laserscanner 4 abgeleitet und einem Zeitpunkt tₙ sowie einem momentanen Scanwinkel εₙ zugeordnet werden kann.

Mit den Messwerten für die Entfernung eₙ, dem momentanen Scanwinkel εₙ und dem Zeitpunkt tₙ, können die Messpunkte Pₙ mit zeitlicher Zuordnung in einem Polarkoordinatensystem beschrieben werden, in dem der Laserscanner 4 den Koordinatenursprung darstellt.

Die Verarbeitung der Messwerte zur Bestimmung der Geschwindigkeit eines angemessenen Fahrzeuges 3 ist aus dem Stand der Technik, z. B. der WO 03/019234 A1 und der EP 1 466 311 B1 bekannt und in der noch nicht veröffentlichten DE 10 2007 038 364 beschrieben.

Nach der Bestimmung der Geschwindigkeit eines im Winkelbereich 1 befindenden Fahrzeuges 3 wird diese mit einer vorgegebenen Grenzgeschwindigkeit verglichen und im Falle der Überschreitung wird eine Kamera 5 ausgelöst, um eine elektronische Aufnahme zu erstellen, sobald sich dieses Fahrzeug 3 in einer vorgegebenen Entfernung zur Kamera 5, der Fotoentfernung e_{foto}, befindet. Die elektronische Aufnahme wird abgespeichert, sodass jederzeit ein Beweisfoto ausgedruckt werden kann.

Die Kamera 5 ist über eine Steuer- und Auswerteeinheit 6 mit dem Laserscanner 4 verbunden und ist grundsätzlich so zum Laserscanner 4 und zur Fahrbahn 2 ausgerichtet und eingestellt, dass sie ein Objektfeld mit einer Breite des Winkelbereiches 1 in der Fotoentfernung e_{foto} scharf abbildet.

Auch diese Verfahrensschritte sind aus den vorgenannten Schriften bekannt.

Um das Fahrzeug 3 im Beweisfoto als das angemessene Fahrzeug 3 sichtbar zu markieren, wird aus den Messwerten eine Markierung 7 generiert.

Dazu werden die Messwerte, die innerhalb dem zum Auslösezeitpunkt der Kamera 5 zeitnächsten Scan gewonnen werden, abgespeichert.

Vorteilhaft werden die Messwerte des Scans gespeichert, während dem auch die Fotoentfernung e_{foto} festgestellt wurde.

Die Messwerte eines Scans stellen eine Vielzahl von Messwertepaaren, aus einem momentanen Scanwinkel εₙ und einer Entfernung eₙ, dar, die jeweils einen Messpunkt Pₙ im Winkelbereich 1 repräsentieren.

Bei einer konstanten Scanfrequenz und vorgegebenen Pulsfrequenz bewirkt die Fahrzeugoberfläche entlang einer Linie in der Scanebene eine endliche Anzahl von Messwertepaaren.

Vorteilhaft werden die Pulsfrequenz und die Scanfrequenz so aufeinander abgestimmt, dass der Winkelabstand zwischen den Messwertepaaren 1° beträgt, sodass bei einem Scanwinkel ε von z. B. 45°, zur Überwachung einer Fahrtrichtung, sechsundvierzig und bei einem Scanwinkel ε von z. B. 180°, zur Überwachung beider Fahrtrichtungen, einhunderteinundachzig Messwertepaare pro Scan gewonnen werden.

Um die Erläuterung der Erfindung zu vereinfachen, soll davon ausgegangen werden, dass alle während eines Scans gewonnenen Messwertepaare von Fahrzeugen 3 stammen bzw. solche, die nicht von Fahrzeugen 3 stammen, bereits ausgesondert wurden. Alle Messwertepaare, die gemeinsam ein winkelbildendes Streckpaar (nachfolgend Objektwinkel genannt) beschreiben, bilden eine Gruppe, die jeweils einem Fahrzeug 3 zugeordnet wird. Theoretisch besteht die Gruppe aus benachbarten Messwertepaaren mit einem gleichen Winkelabstand, z. B. von 1°, zueinander. Es ist jedoch klar, dass aufgrund unterschiedlicher Reflexionseigenschaften der Fahrzeugoberfläche in den einzelnen Auftreffpunkten nicht in jedem Auftreffpunkt ein ausreichend hoher Strahlungsanteil des Laserstrahles reflektiert wird, um ein Messwertepaar zu ermitteln.

Es ist dem Fachmann auch klar, dass die durch die Messwertepaare bestimmten Messpunkte Pₙ nur näherungsweise auf einer Geraden liegen, und durch mathematische Approximationsverfahren der Objektwinkel in die Gruppe von Messwertepaaren gelegt wird.

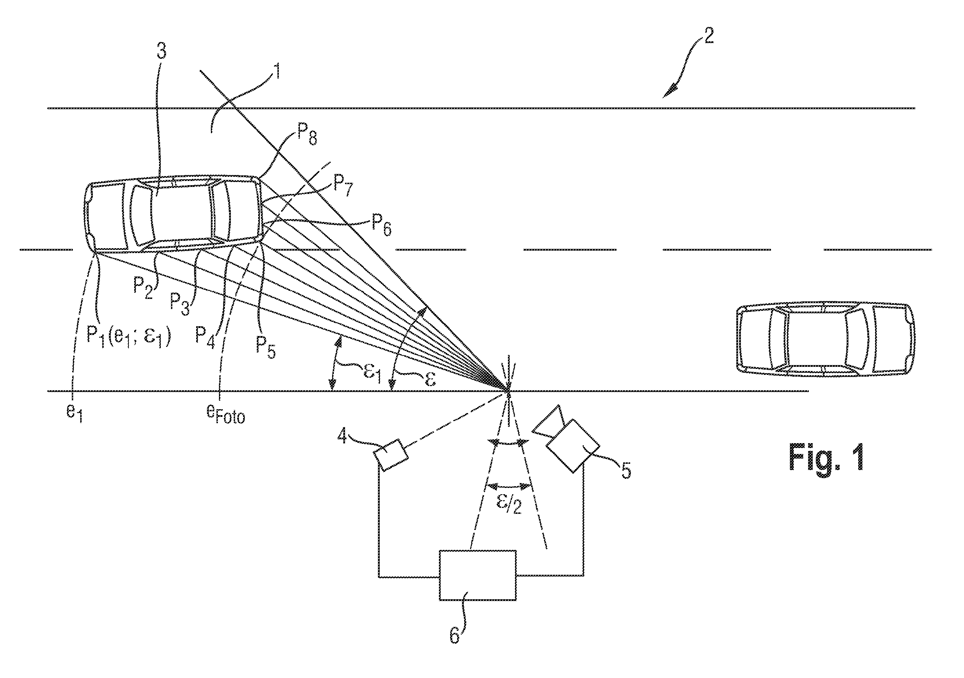

In Fig. 1 sind in einem Winkelbereich 1, bestimmt durch den Scanwinkel ε, beispielhaft die Messwertepaare (e₁; ε₁) bis (e₈; ε₈) dargestellt, die die Messpunkte P₁ - P₈ darstellen.

Die dargestellten Messwertepaare (eₙ; εₙ) bilden gemeinsam eine Gruppe.

Eine gedachte Verbindungslinie zwischen den Messwertepaaren (eₙ; εₙ) beschreibt einen Objektwinkel, der mit seinen Schenkellängen der Länge der dem Laserscanner 4 zugewandten Fahrzeugseite und der Breite des Fahrzeughecks bei Erfassung des abfließenden Verkehrs bzw. der Fahrzeugfront bei zufließendem Verkehr in der Scanebene entspricht.

Aus dieser Gruppe von Messwertepaaren (eₙ; εₙ) wird eine Markierung 7 generiert, die mit der Aufnahme überlagert wird, sodass ein Bild entsteht, in dem auf dem angemessenen Fahrzeug 3 eine Markierung 7 über die Breite und/ oder Länge des abgebildeten Fahrzeuges bevorzugt in Höhe der Scanebene entsteht.

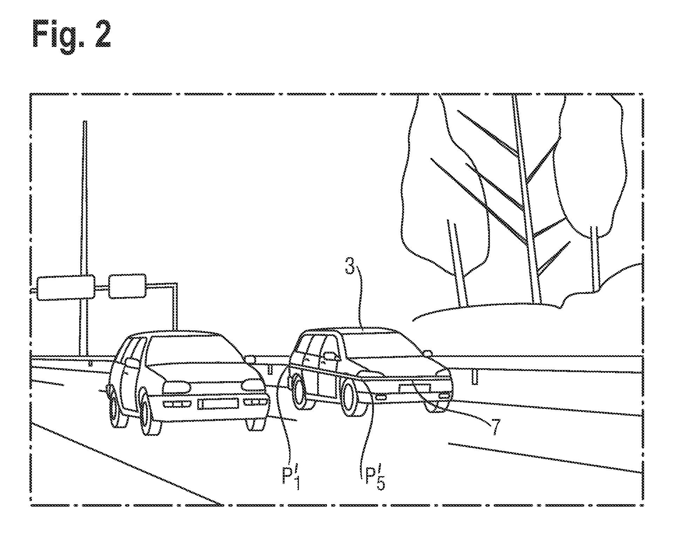

In den Fig. 2a und 2b ist ein Beweisfoto, als fotografische Aufnahme und als Prinzipskizze gezeigt, in der ein erstes Foto in der Fotoentfernung e_{foto} abgebildet ist und auf dem entlang der sichtbaren Fahrzeugseite und der Fahrzeugfront in einer horizontalen Ebene eine Markierung 7 in Form einer Volllinie sichtbar ist. Die Volllinie soll einen hohen Kontrast zur Fahrzeugkarosse haben und möglichst schmal sein.

Im Unterschied zur Darstellung in Fig. 1 werden in der Praxis in einem Scan häufig mehr als nur eine Gruppe von Messwertepaaren erfasst.

Aus welcher Gruppe nun die Markierung 7 generiert wird, hängt davon ab, welche der Gruppen den Entfernungswert enthält, der der Fotoentfernung e_{foto} zuzuordnen ist, bzw. welche Gruppe die Entfernung enthält, die der Fotoentfernung e_{foto} am nächsten kommt.

Da die Messwertepaare des Scans, der unmittelbar bei Ermittlung der Fotoentfernung e_{foto} durchgeführt wird, der Bildung der Markierung 7 zugrunde gelegt werden, kann sicher davon ausgegangen werden, dass das angemessene Fahrzeug 3, dessen Position zum Zeitpunkt des Auslösens der Kamera 5 in der Fotoentfernung e_{foto} ist, tatsächlich durch die Markierung 7 korrekt gekennzeichnet ist, die durch diese Gruppe von Messwertepaaren gebildet wird.

Um diese Markierung 7 zu generieren, wird die Gruppe von Messwertepaaren, die Messpunkte Pₙ am Fahrzeug 3 in der horizontalen Scanebene repräsentieren, in eine Gruppe von Bildpunkten transformiert, die korrelierende Punkte in der Abbildung des perspektivisch aufgenommenen Fahrzeuges 3, das heißt in der Aufnahme darstellen.

Aus der Gruppe von Bildpunkten wird nun eine digitalisierte Markierung 7 gebildet, die die Bildpunkte beinhaltet.

Die mit der Aufnahme gewonnenen, elektronisch erfassten Bilddaten des Fahrzeuges 3 können als digitalisierte Aufnahme in einer Datei gemeinsam mit der digitalisierten Markierung 7 abgespeichert werden, sodass bei Visualisierung der Datei die Markierung 7 das angemessene Fahrzeug 3 sichtbar überlagert.

Vorteilhafter ist es jedoch, die digitalisierte Aufnahme und die digitalisierte Markierung 7 in getrennten, jedoch miteinander verknüpften Dateien abzuspeichern. Zur Visualisierung werden die Dateien überlagert, sodass auch hier das angemessene Fahrzeug 3 von der Markierung 7 überlagert sichtbar wird. Bei einer getrennten Speicherung bleibt die digitalisierte Abbildung des Fahrzeuges 3, insbesondere des Nummernschildes unbeeinflusst und mit ihrer vollen Information erhalten.

Die Markierung 7 überlagert dann nur temporär zur Betrachtung der Aufnahme an einem Bildschirm oder zum Ausdrucken eines Fotos die Aufnahme des Fahrzeuges 3. Im Sinne der Erfindung sollen als Dokumente insbesondere Fotos aber auch die genannten Dateien und deren Visualisierung verstanden werden.

Durch die Transformation der Gruppe von Messwertepaaren in eine Gruppe von Bildpunkten kann eine Markierung 7 generiert werden, die in die Abbildung des Fahrzeuges 3 eingeblendet, genau die Messpunkte Pₙ überdeckt, die unmittelbar bei Auslösen der Kamera 5 angemessen wurden. Das heißt die Markierung 7 entsteht auf dem abgebildeten Fahrzeug 3 entlang der Auftreffpunkte.

Vorteilhaft überdeckt die Markierung 7 alle diese Messpunkte Pₙ und erstreckt sich als Linie vollständig über die Länge und Breite der sichtbaren Seiten des abgebildeten Fahrzeuges 3.

Sie kann aber auch nur einen Teil der Messpunkte Pₙ überdecken und stellt dann vorteilhaft eine Linie dar, die sich nur über die sichtbare Seite erstreckt, auf der sich nicht das Kennzeichen befindet, um eine Beeinflussung der Abbildung des Kennzeichens sicher zu vermeiden.

Die Linie kann als Volllinie ausgeführt werden. Vorteilhafter ist jedoch eine unterbrochene Linie, wie eine Strichlinie oder eine Punktlinie, womit die Abbildung des Fahrzeuges 3 weniger beeinträchtigt wird.

Die Markierung 7 kann auch eine linienförmige Anordnung einfacher geometrischer Gebilde sein, wie Dreiecke oder Quadrate, die sich augenfällig von der Abbildung des Fahrzeuges 3 abheben.

Es ist erfindungswesentlich, dass die zur Markierung 7 des Fahrzeuges 3 verwendeten Messdaten im Moment der Erstellung einer elektronischen Aufnahme des angemessenen Fahrzeuges 3 durch das Fahrzeug 3 selbst bewirkt werden und nur diese Messdaten zur Generierung der Markierung 7 erforderlich sind. Der dafür erforderliche Rechen- und Speicheraufwand ist vergleichsweise gering.

### Bezugszeichenliste

- 1: Winkelbereich
- 2: Fahrbahn
- 3: Fahrzeug
- 4: Laserscanner
- 5: Kamera
- 6: Steuer- und Auswerteeinheit
- 7: Markierung
- ε: Scanwinkel
- eₙ: Entfernungen
- εₙ: momentane Scanwinkel
- tₙ: Zeitpunkte
- e_{foto}: Fotoentfernung
- Pₙ: Messpunkte

## Patentansprüche

1. Verfahren zur Erfassung einer Geschwindigkeit eines Fahrzeuges (3) und einer beweiskräftigen, sichtbaren Zuordnung der erfassten Geschwindigkeit zu dem angemessenen Fahrzeug (3), bei dem
- eine Messstrahlung über einen vorgegebenen Winkelbereich (1) horizontal über eine Fahrbahn (2) gerichtet wird und Fahrzeuge (3) beim Durchfahren eines Messbereiches Messwerte generieren, aus denen die Geschwindigkeit und die sich ändernde Position des angemessenen Fahrzeuges (3) ermittelt wird,
- die für das Fahrzeug (3) ermittelte Geschwindigkeit mit einer vorgegebenen Grenzgeschwindigkeit verglichen wird,
- bei Überschreitung der Grenzgeschwindigkeit und Ermittlung einer vorgegebenen, den Winkelbereich (1) scharf abbildenden Entfernung, die eine Fotoentfernung (e_{foto}) darstellt, eine elektronische Aufnahme vom betreffenden Fahrzeug (3) erstellt und als digitalisierte Aufnahme gespeichert wird, und zu dessen eindeutiger Identifizierung aus den Messdaten eine Markierung (7) generiert wird, die mit der Aufnahme überlagert wird,
**dadurch gekennzeichnet,**
- **dass** die Messstrahlung eine gepulste Laserstrahlung ist, mit der der Winkelbereich (1) mehrfach abgescannt wird,
- **dass** in jedem Scan Messwerte generiert werden, die eine Vielzahl von Messwertepaaren, aus einem momentanen Scanwinkel (εₙ) und einer Entfernung (eₙ), darstellen und jeweils einen Messpunkt (Pₙ) im Winkelbereich (1) repräsentieren, der einen Auftreffpunkt auf dem Fahrzeug (3) beschreibt,
- **dass** die Messwertepaare des zum Auslösezeitpunkt der Kamera (5) zeitnächsten Scans gespeichert werden,
- **dass** die Messwertepaare, die jeweils einen Objektwinkel beschreiben, einer Gruppe zugeordnet werden und aus der Gruppe, die als Messwert die Fotoentfernung (e_{foto}) enthält, die Markierung (7) generiert und als digitalisierte Markierung (7) abgespeichert wird und
- **dass** die digitalisierte Aufnahme und die digitalisierte Markierung (7) überlagert werden, um sie an einem Bildschirm zu visualisieren oder ein Beweißfoto auszudrucken.

2. Verfahren nach Anspruch 1, **dadurch gekennzeichnet,**
**dass** die Abbildung und die Markierung (7) jeweils digitalisiert in unterschiedlichen, miteinander verknüpften Dateien abgespeichert werden und die Überlagerung der Markierung (7) mit der Aufnahme nur temporär erfolgt.

3. Verfahren nach Anspruch 1, **dadurch gekennzeichnet,**
**dass** die Markierung (7) gebildet wird, die sich vollständig über die Länge und Breite der sichtbaren Seiten des abgebildeten Fahrzeuges (3) erstreckt.

4. Verfahren nach Anspruch 1, **dadurch gekennzeichnet,**
**dass** die Markierung (7) gebildet wird, die eine Linie darstellt, die sich nur über die sichtbare Seite des abgebildeten Fahrzeuges (3) erstreckt, auf der sich nicht das Kennzeichen befindet, um eine Beeinflussung der Abbildung eines Kennzeichens sicher zu vermeiden.

5. Verfahren nach Anspruch 4, **dadurch gekennzeichnet,**
**dass** die Linie eine unterbrochene Linie darstellt, um die Abbildung des Fahrzeuges (3) nicht unnötig stark zu beeinträchtigen.

6. Verfahren nach Anspruch 1, **dadurch gekennzeichnet, dass** die Markierung (7) gebildet wird, die eine linienförmige Anordnung einfacher geometrischer Gebilde, wie Dreiecke oder Quadrate, darstellt, die sich augenfällig von der Abbildung des Fahrzeuges (3) abheben.

## Claims

1. Method for detecting a speed of a vehicle (3) and conclusive, visible allocation of the detected speed to the measured vehicle (3), in which
- a measuring radiation is directed horizontally across a roadway (2) over a predetermined angle range (1) and when passing through a measurement zone vehicles (3) generate measurement values, from which the speed and the changing position of the measured vehicle (3) is determined,
- the speed determined for the vehicle (3) is compared to a predetermined limit speed,
- when the limit speed is exceeded and a predetermined distance, which forms a sharp image of the angle range (1) and which is a photo distance (e_{foto}), is determined, an electronic image of the vehicle (3) concerned is captured and is stored as digitized image, and a marking (7), which is superimposed on the image, is generated from the measurement data for clear identification of the vehicle (3),
**characterised in**
- **that** the measuring radiation is a pulsed laser radiation by which the angle range (1) is repeatedly scanned,
- **that** measurement values are generated in each scan, which form a plurality of measurement value pairs, consisting of an instantaneous scanning angle (εₙ) and a distance (eₙ), and each represent a measurement point (Pₙ) in the angle range (1) which defines an impact point on the vehicle (3),
- **that** the measurement value pairs of the last scan at the trigger time of the camera (5) are stored,
- **that** the measurement value pairs which each define an object angle are assigned to a group and the marking (7) is generated from the group containing the photo distance (e_{foto}) as measurement value and is stored as digitized marking (7), and
- **that** the digitized image and the digitized marking (7) are superimposed, in order to visualize them on a screen or print an evidence photo.

2. Method according to claim 1, **characterised in that** the image and the marking (7) are each stored in digitized form in different files being linked to one another and the superimposition of the marking (7) on the image is only temporary.

3. Method according to claim 1, **characterised in that** the marking (7) is formed, which extends completely over the length and width of the visible sides of the imaged vehicle (3).

4. Method according to claim 1, **characterised in that** the marking (7) is formed, which is a line only extending over the visible side of the imaged vehicle (3) on which the number plate is not located, in order to reliably avoid influencing the image of a number plate.

5. Method according to claim 4, **characterised in that** the line is a broken line, in order to avoid unnecessary heavy impairment of the image of the vehicle (3).

6. Method according to claim 1, **characterised in that** the marking (7) is formed, which is a linear arrangement of simple geometric forms, such as triangles or squares, that apparently stand out from the image of the vehicle (3).

## Revendications

1. Procédé de détection d'une vitesse d'un véhicule (3) et affectation visible et concluante de la vitesse détectée au véhicule (3) mesuré, dans lequel
- un rayonnement de mesure est dirigé horizontalement sur une route (2) sur une zone angulaire (1) prédéterminée et en passant par une zone de mesure des véhicules (3) gênèrent des valeurs de mesure dont la vitesse et la position changeante du véhicule (3) mesuré est déterminée,
- la vitesse déterminée pour le véhicule (3) est comparée à une vitesse maximale prédéterminée,
- quand la vitesse maximale est dépassée et une distance prédéterminée, qui forme une image nette de la zone angulaire (1) et qui est une distance de photo (e_{foto}), est déterminée, une image électronique du véhicule (3) concerné est prise et est stockée comme image numérisée, et un marquage (7) qui est superposé sur l'image est généré à partir des données de mesure pour l'identification claire du véhicule (3),
**caractérisé en ce**
- **que** le rayonnement de mesure est un rayonnement laser pulsé par lequel la zone angulaire (1) est balayée de manière répétée,
- **que** dans chaque balayage des valeurs de mesure sont générées, qui forment une pluralité de paires de valeurs de mesure, composées d'un angle de balayage (εₙ) instantané et d'une distance (eₙ), et représentent chacune un point de mesure (Pₙ) dans la zone angulaire (1) qui définit un point d'impact sur le véhicule (3),
- **que** les paires de valeurs de mesure du dernier balayage au moment de déclenchement de la camera (5) sont stockées,
- **que** les paires de valeurs de mesure qui définissent chacune un angle d'objet sont affectées à un groupe, et le marquage (7) est généré du groupe, contenant la distance de photo (e_{foto}) comme valeur de mesure, et est stocké comme marquage (7) numérisé, et
- **que** l'image numérisée et le marquage (7) numérisé sont superposés, pour les visualiser sur un écran ou imprimer une photo de preuve.

2. Procédé selon la revendication 1, **caractérisé en ce que** l'image et le marquage (7) sont chacun stockés sous forme numérique dans différents fichiers étant liés les uns aux autres et la superposition du marquage (7) sur l'image n'est que temporaire.

3. Procédé selon la revendication 1, **caractérisé en ce que** le marquage (7) est formé, qui s'étend complètement sur la longueur et largeur des côtés visibles du véhicule (3) imagé.

4. Procédé selon la revendication 1, **caractérisé en ce que** le marquage (7) est formé, qui est une ligne ne s'étendant que sur le côté visible du véhicule (3) imagé, où ne se trouve pas le numéro d'immatriculation, pour éviter de manière fiable une influence sur l'image d'un numéro d'immatriculation.

5. Procédé selon la revendication 4, **caractérisé en ce que** la ligne est une ligne en pointillé, pour éviter des altérations fortes inutiles de l'image du véhicule (3).

6. Procédé selon la revendication 1, **caractérisé en ce que** le marquage (7) est formé, qui est un arrangement linéaire de formes géométriques simples, comme des triangles ou des carrés, qui évidemment se détachent de l'image du véhicule (3).
